# FASCICULE DE BREVET EUROPEEN

(11) **EP 4 110 861 B1**
(45) Date de publication et mention de la délivrance du brevet: **11.10.2023**
(21) Numéro de dépôt: 21706997.0
(22) Date de dépôt: 26.02.2021
(51) Int. Cl.: C08J 9/00, C08L 23/08, H01B 3/44

(54) **ARTICLES ET STRUCTURES RÉSISTANTS AU FEU**
FEUERBESTÄNDIGE GEGENSTÄNDE UND STRUKTUREN
FIRE-RESISTANT ARTICLES AND STRUCTURES

(30) Priorité: 26.02.2020 LU 101657; 26.02.2020 LU 101658
(43) Date de publication de la demande: 04.01.2023
(73) Titulaire: NMC S.A., 4731 Eynatten (BE)
(72) Inventeur: JOB, Denis, 4031 Angleur (BE); SCHÖPES, Florence, 4831 Bilstain (BE); PATRON, Christian, 4730 Raeren (BE)
(74) Mandataire: Office Freylinger
(86) Numéro de dépôt international: PCT/EP2021/054922
(87) Numéro de publication internationale: WO 2021/170846

(56) Documents cités:
- US-A1- 2002 143 114
- US-A1- 2014 030 520
- US-A1- 2016 304 691
- US-A1- 2018 247 738

## Description

### Domaine technique

La présente invention concerne les articles et structures résistants au feu, respectivement retardateurs de flamme, utilisables dans de nombreux domaines, notamment à des fins de protection contre le feu dans la construction ou l'automobile, par exemple une gaine ou une plaque de mousse, servant de protection d'une conduite, d'une surface, contre l'inflammation.

### Etat de la technique

Le comportement au feu et surtout la résistance au feu sont des paramètres essentiels à prendre en compte lors de la mise au point d'un matériau. Ceci est particulièrement vrai dans le cas de matériaux organiques, comme les matières plastiques, les caoutchoucs, les fibres ou textiles organiques, etc., qui sont utilisés dans de nombreux domaines à cause de leurs nombreuses propriétés physiques et techniques avantageuses. Cependant, il est bien connu que ces matériaux sont généralement inflammables et par nature souvent insuffisamment résistants au feu. Afin de pouvoir les utiliser dans de nombreuses applications, ils doivent être modifiés dans le but de prévenir ou au moins retarder l'incendie, c'est-à-dire de les rendre plus résistants au feu.

De nombreuses tentatives d'amélioration de la résistance au feu et du comportement au feu de tels matériaux sont connues. En particulier, on a envisagé l'utilisation d'additifs tels que des agents retardateurs de flamme dans ces matériaux, si cela est faisable, ou encore dans la mesure du possible la prévision d'une protection extérieure supplémentaire en matériaux peu inflammables, voire ininflammables de nature inorganiques.

L'addition d'agents retardateurs de flamme dans un matériau peut en l'occurrence s'envisager dans le cas de compositions polymères, thermoplastiques ou thermodurcissables, et il existe en effet de nombreuses solutions de ce type avec des performances plus ou moins bonnes. Il existe en l'occurrence différents types d'agent retardateur de flamme, entre autres des composés de type minéral, des composés halogénés ou les composés phosphorés.

Bien que certains de ces composés permettent d'améliorer nettement le comportement au feu de polymères, ils présentent d'autres désavantages. Par exemple, parmi les composés halogénés un grand nombre présentent une toxicité élevée en tant que tels. De plus, les composés halogénés comprenant des cycles aromatiques peuvent se dégrader en dioxines et composés de type dioxine, lorsqu'ils sont chauffés, lors de la production, pendant un incendie, pendant le recyclage, ou même pendant une exposition au soleil.

De plus, l'incorporation de ces agents dans une composition modifie les propriétés physiques de celle-ci et peut même rendre la composition modifiée inappropriée pour l'utilisation envisagée.

Envisager une protection extérieure qui présente intrinsèquement de bonnes propriétés de résistance au feu parce que de nature peu ou non inflammable est malheureusement rarement faisable dans la pratique, car les matériaux disponibles de ce type ne possèdent justement très souvent pas les propriétés recherchées de flexibilité, de facilité de façonnage, de poids réduit, de coûts avantageux, etc.

US 2016/0304691 A1 décrit une mousse composite avec des densités relativement faibles comprenant des agents retardateurs de flamme non-halogénés. US 2002/0143114 décrit des polymères non-moussés comprenant des agents retardateurs de flamme pour la production de câbles. US 2014/0030520 A1, US 2018/0247738 A1 décrivent des polymères non-moussés, résistants aux flammes, comprenant des agents retardateurs non-halogénés, pour la production de câbles.

Malgré les solutions existantes, il apparaît donc intéressant de développer des matériaux alternatifs présentant de bonnes propriétés au feu, respectivement des articles permettant d'améliorer les propriétés de résistance au feu de matériaux existants.

### Objet de l'invention

Un objet de la présente invention est par conséquent de proposer des articles et structures ayant une bonne tenue au feu ou résistance au feu, utilisables dans de nombreux domaines, notamment de la construction et de l'automobile.

### Description générale de l'invention

Afin d'atteindre l'objectif mentionné ci-dessus, la présente invention propose, dans un premier aspect, un article en mousse polymère résistant au feu, la mousse polymère comprenant
a) 25 à 55 % en poids d'une composition en polymères comprenant
   a1) un premier composant polymère choisi parmi les copolymères d'éthylène-acrylate d'alkyle en C₁ à C₄, les copolymères d'éthylène-acétate de vinyle, ou leurs mélanges,
   a2) un deuxième composant polymère choisi parmi les copolymères d'éthylène comportant des fonctions anhydrides maléique, de préférence des copolymères d'éthylène-acrylate d'alkyle en C₁ à C₄ greffés anhydride maléique, les copolymères d'éthylène-acétate de vinyle greffés anhydride maléique, ou leurs mélanges,
   a3) un troisième composant polymère choisi parmi les polyoléfines plastomères, les polyoléfines élastomères, les homopolymères d'éthylène et leurs mélanges,
b) 45 à 70 % en poids d'un composant ignifugeant choisi parmi l'hydroxyde de magnésium, l'hydroxyde d'aluminium, une combinaison de carbonate de calcium et de gomme silicone, ou leurs mélanges, et éventuellement une ou plusieurs nanoargiles,
c) 0,01 à 8 % en poids d'additifs comprenant les pigments, les antioxydants, les agents anti-UV, les lubrifiants, les agents antistatiques, les nucléateurs de cellules, les dénucléateurs de cellules, les agents réflecteurs/absorbeurs d'infra-rouges, les stabilisateurs thermiques, les désactivateurs métalliques,
l'article en mousse polymère ayant subi une réticulation par voie chimique et/ou physique, la densité de la mousse étant comprise entre 700 et 1000 kg/m³ et les pourcentages en poids se rapportant au poids de l'article en mousse polymère (la somme de tous les composants représentant 100 % en poids de l'article en mousse polymère).

A la recherche d'une solution intégrant des propriétés d'isolation thermique et/ou phoniques avec des qualités acceptables de résistance au feu, les inventeurs ont identifié qu'il est non seulement possible d'obtenir des mousses polymères de densités et de structure appropriées avec des teneurs élevées en ignifugeants minéraux, mais surtout que les compositions indiquées ci-dessus ont un pouvoir de résistance au feu, respectivement à la flamme, qui est bien supérieur à celle de compositions connues, voire similaires, même non moussées (c'est-à-dire denses). Comme le montrent les exemples et la discussion ci-après, les résultats obtenus sont non seulement étonnamment bons, mais de plus contre-intuitifs pour l'homme de métier.

Le premier composant polymère a1) est choisi parmi les copolymères d'éthylène-acrylate d'alkyle en C₁ à C₄ et les copolymères d'éthylène-acétate de vinyle, c'est-à-dire les copolymères d'éthylène avec de l'acrylate de méthyle (EMA), d'éthyle (EEA), de propyle (EPA) ou de butyle (EBA) ou de l'acétate de vinyle (EVA) comme comonomère. De préférence, ce comonomère représente 5 à 40 % en poids, notamment de 10 à 35 % en poids, en particulier de 14 à 30 % en poids, de manière particulièrement préférée de 16 à 25 % en poids du poids de ces copolymères. L'indice de fluidité (MFI, melt flow index, ou MFR, melt flow rate) du premier composant se situe généralement entre 0,1 et 20 g/10 min, de préférence entre 2 et 10 g/10 min (190 °C, 2.16 kg).

La quantité du premier composant polymère a1) dans l'article selon l'invention se situera dans la plupart des cas entre 5 et 35 % en poids, notamment de 7,5 à 30 % en poids, en particulier de 10 à 25 % en poids du poids de l'article en mousse polymère.

Le deuxième composant polymère a2) est choisi parmi les copolymères comportant des fonctions anhydride maléique. Il peut s'agir de copolymères d'un ou de plusieurs monomères comprenant des groupes anhydride maléique dans la chaîne polymère ou comme groupes latéraux (greffés). L'autre ou les autres unités monomères sont par exemple l'éthylène, les acrylates d'alkyle en C₁ à C₄, l'acétate de vinyle, etc. De préférence, le deuxième composant polymère comprend ou est constitué de copolymères d'éthylène-acrylate d'alkyle en C₁ à C₄ greffés anhydride maléique, de copolymères d'éthylène-acétate de vinyle greffés anhydride maléique, ou de leurs mélanges. La teneur en groupes anhydride maléique est généralement comprise entre 0,1 et 10 % en poids, notamment de 0,5 à 5 % en poids, en particulier de 1 à 4 % en poids du poids total de ces copolymères. L'indice de fluidité (MFI ou MFR) du deuxième composant a2) est généralement situé entre 0,15 et 200 g/10 min, notamment entre 0,5 et 100 g/10 min, de préférence entre 1 et 20 g/10 min (190°C, 2,16 kg).

Le deuxième composant polymère a2) représente en général entre 2 et 40 % en poids, notamment de 3 à 30 % en poids, en particulier de 4 à 25 % en poids du poids de l'article en mousse polymère.

Le troisième composant polymère a3) est choisi parmi les polyoléfines plastomères (POP), les polyoléfines élastomères (POE), les homopolymères d'éthylène et leurs mélanges. Les POE et POP sont des copolymères d'éthylène avec d'autres oléfines, qui se situent entre le polyéthylène à basse densité linéaire (LLDPE) et les élastomères totalement amorphes tant au niveau de leur densité qu'au niveau de leur cristallinité. La densité des POE se situe généralement entre 0,86 et 0,89 et celle des POP généralement entre 0,89 et 0,91 kg/m³. Ces polymères peuvent être obtenus par copolymérisation coordinative de l'éthylène en présence d'une α-oléfine supérieure (but-1-ène, hex-1-ène, etc.), par exemple par catalyse avec un métallocène. La composition approximative en comonomère α-oléfine varie typiquement de 10 à 30 % en poids. Comparés au LLDPE, les POP et POE présentent un module de flexion, une résistance à la traction et un point de fusion plus faibles ; ils montrent un allongement (pouvant dépasser 800 %) et une ténacité plus élevés (Harutun G. Karian, Handbook of polypropylene and polypropylene composites, p. 201-204, Marcel Dekker, 2^{e} éd. 2009, 670 p.). Les homopolymères d'éthylène sont choisis parmi les polyéthylènes à très basse densité (VLDPE, very low density polyethylene), les polyéthylènes à basse densité linéaire (LLDPE, linear low-density polyethylene), les polyéthylènes à basse densité linéaire à catalyse métallocène (mLLDPE, metallocene linear low-density polyethylene), les polyéthylènes basse densité, (LDPE, low-density polyethylene), les polyéthylènes moyenne densité (MDPE, medium-density polyethylene) et les polyéthylène haute densité (HDPE, high-density polyethylene). L'indice de fluidité (MFI ou MFR) du troisième composant a3) est généralement situé entre 0,15 et 30 g/10 min, notamment entre 0,2 et 20 g/10 min, de préférence entre 0,3 et 10 g/10 min (190 °C, 2,16 kg). La quantité du troisième composant a3) est fonction de la quantité en composants a1) et a2), de manière que la somme des quantités de a1) + a2) + a3) représente 30 à 55 % en poids du poids de l'article en mousse polymère, mais au minimum la quantité de a3) est de 0,5 % en poids.

Le composant ignifugeant b) comprend de l'hydroxyde d'aluminium (décomposition : 220 °C), de l'hydroxyde de magnésium (décomposition : 330-350 °C) et/ou une combinaison de carbonate de calcium et de gomme silicone. Les composants hydroxydes ignifugeants agissent notamment en libérant de l'eau à plus haute température. Ces composants se trouvent généralement sous forme de particules d'hydroxydes précipités à surface spécifique élevée, ayant un diamètre moyen des particules inférieur à 30 µm et de préférence compris entre 0.1 et 10 µm. Ces particules peuvent le cas échéant être enrobés de matières organiques afin d'améliorer davantage leur compatibilité avec les composants polymères. L'incorporation d'additifs minéraux, comme c'est le cas avec le composant ignifugeant de la présente invention, interfère fortement avec le moussage, non seulement par le fait que ces particules agissent comme agent nucléant (formateur de cellules de gaz), mais surtout au vu de leur quantité importante. Lorsque le composant ignifugeant de carbonate de calcium combiné avec de la gomme silicone est exposé au feu, il forme un système intumescent dans lequel les copolymères d'éthylène et le carbonate se décomposent et forment une mousse charbonnée et la gomme silicone se décompose et forme un verre qui stabilise la mousse charbonnée. Selon l'invention, un moussage approprié est rendu possible notamment par l'utilisation d'une quantité appropriée du deuxième composant polymère a2) agissant comme compatibilisant entre la phase polymère et la phase minérale et d'autre part par l'utilisation d'une quantité appropriée du troisième composant polymère a3) permettant de contrecarrer les effets des fortes teneurs en matières minérales sur les propriétés structurelles et mécaniques.

Dans une forme avantageuse de l'invention, la proportion en composant ignifugeant peut être formée par jusqu'à 10 % en poids de nanoargile(s), de préférence de 0.1 à 6 % en poids et en particulier de 1 à 5 % en poids par rapport au poids de l'article en mousse polymère. Il est souhaitable d'utiliser les nanoargiles sous forme finement divisée, par exemple sous forme de particules d'un diamètre moyen n'excédant pas 30 µm et de préférence compris entre 0,001 et 10 µm. Des exemples de nanoargiles appropriées sont notamment les montmorillonites naturelles ou modifiées, par exemple modifiées par des sels d'ammonium quaternaires, telles que la CLOISITE 20A (Southern Clay Products, USA), les hectorites naturelles ou modifiées, par exemple la DRAGONITE-HP (Applied Minerals), etc.

L'article en mousse polymère comprend comme composant c) de 0,01 à 8 % en poids, de préférence de 0,1 à 5 % en poids, notamment de 0,5 à 3 % en poids d'additifs choisis notamment parmi les agents stabilisateurs de volume, les agents antioxydants, les anti-UV, les antistatiques, les colorants et pigments, les charges, les anti-fogs, les anti-blocks, les régulateurs de taille cellulaire, les lubrifiants, et éventuellement d'autres agents anti-feux (c'est-à-dire différents de ceux du composant ignifugeant b)).

Parmi les agents stabilisateurs de volume utiles dans le contexte de l'invention, on peut citer les amides d'acides gras, comprenant par exemple le stéaramide, le palmitamide, le behenamide et leurs mélanges, les amines d'acides gras correspondants, les esters de glycérine et d'acide gras, comprenant par exemple les mono-esters alpha, bêta avec les acides gras, les di-esters avec les acides gras, les tri-ester avec les acides gras, les acides gras comprenant les longueurs de chaines C₈ à C₂₂, saturées ou non, et leurs mélanges, etc.

D'autres additifs comprennent les pigments, les agents antistatiques, les nucléateurs de cellules, comprenant par exemple le talc, la silice, le carbonate de calcium, les dénucléateurs de cellules, comprenant par exemple les cires de polyoléfines oxydées, les résines polaires compatibilisantes (autres que ceux du composant a2)), comprenant par exemple les ionomères, les copolymères de glycidyl méthacrylate, etc., les agents réflecteurs/absorbeurs d'infra-rouges, comprenant par exemple les flakes d'aluminium, les flakes d'acier, le noir de carbone, le carbone graphite, les antioxydants process et application, les stabilisateurs thermiques process et application, les absorbeurs / désactivateurs UV, les désactivateurs métalliques, les agents de lubrification, comprenant par exemple les dérivés de polymères fluorés, les amides, le nitrure de bore, les silicones, les stéarates, les cires de polyoléfines, et les mélanges d'un ou de plusieurs des additifs mentionnés.

Des agents anti-feu supplémentaires (autres que le composant b)) peuvent être prévus dans le cadre du composant c). En l'occurrence, il peut être avantageux d'utiliser en plus des molécules organophosphorées (p.ex. le 9,10-dihydro-9-oxa-10-phosphaphénanthrène-10-oxyde (DOPO) ou ses dérivés), les sulfénamides et leurs mélanges.

Selon les applications, notamment selon la forme voulue de l'article en mousse polymère, l'indice de fluidité (MFI ou MFR) de la composition entière de l'article, c'est-à-dire intégrant les composants a), b) et c), sera généralement réglé à une valeur entre 0,5 et 50 g/10 min, de préférence entre 1 et 30 g/10 min, notamment entre 1,5 et 25 g/10 min (190 °C, 2,16 kg). Ce réglage peut se faire de manière relativement aisée en variant la proportion en troisième composant polymère par rapport au premier et deuxième composants polymères dans les limites de la teneur totale de l'article en composition en polymères.

Le choix de l'agent de moussage pour la réalisation de l'article en mousse polymère n'est pas critique. En principe, tous les agents de moussage utilisés traditionnellement pour le moussage de polymères thermoplastiques ou élastomères peuvent également l'être dans le cadre de la présente invention, comme les agents de moussage physiques, en particulier les gaz de moussage, comme les alcanes en C₂ à C₆ linéaires, ramifiés ou cycliques, notamment l'isobutane, l'isopentane, le néopentane, le n-pentane, le cyclopentane, etc., les gaz inertes, notamment l'azote, le CO₂ ou l'argon, les composés hydrofluorocarbonés (HFO), ou d'autres comme l'eau ou l'éthanol (si compatibles avec le (co-)agent de réticulation éventuel), le diméthyléther, etc. Ces agents physiques peuvent être introduits dans l'extrudeuse sous forme gazeuse, liquide ou liquéfié (sous pression). Le ou les agents de moussage peuvent également être des agents de moussage chimiques, solides ou liquides, se décomposant du moins partiellement en gaz sous l'effet de la chaleur. Ils peuvent être introduits à l'alimentation de l'extrudeuse ou injectés/dosés à une certaine distance de celle-ci. Ces agents chimiques sont par exemples les carbonates de soude, l'acide citrique ou leur combinaison, l'azodicarbonamide, l'azobisiso-butyronitrile, la dinitroso-pentaméthylène-tétramine, le 4,4'-oxybis(benzènesulfonylhydrazide), le diphénylsulfone-3,3'-disulfo-hydrazide, le benzène-1,3-disulfohydrazide, le p-toluènesulfonylsemicarbazide, etc. ; ou selon tous les modes de mise en oeuvre bien connus de l'art antérieur comprenant, selon les cas, des opérations d'extrusion et/ou maintien sous pression puis détente et/ou chauffage, etc. Les agents de moussage comprennent également les agents syntactiques, notamment les microbilles expansibles, par exemple EXPANCEL (Nouryon).

Il est à noter, dans le contexte de l'invention, que certains agents nécessaires pour le moussage ne se retrouvent pas (ou pas tels quels) dans l'article en mousse polymère (notamment après dégazage complet), mais d'autres subsistent éventuellement partiellement ou sous forme modifiée dans l'article en mousse polymère, résultant par exemple de la décomposition des agents de moussage chimiques. Ces composants sont comptabilisés pour ce qui est de leur teneur dans le composant additifs c), sauf indication explicite contraire.

Selon l'invention, la mousse constituant l'article en mousse polymère a été réticulée par voie chimique et/ou physique. Dans la préparation de l'article en mousse polymère, le début du moussage peut avoir lieu dans un état déjà partiellement réticulé du (des) (co)polymère(s). Cette mesure permet p. ex. d'augmenter la viscosité de la composition ou même de conditionner la régularité et la finesse de la structure cellulaire finalement obtenue. Dans ce cas, la réticulation se poursuit pendant le moussage et, éventuellement, après.

Néanmoins, la réticulation peut être aussi commencée pendant, ou même après le moussage (notamment dans l'association d'un agent d'expansion physique, c'est-à-dire actif sous l'effet d'une détente, tel que l'isobutane, et d'un agent de réticulation approprié, par exemple silane).

Comme composant de réticulation facultatif d) on peut citer les composés silanes et/ou les peroxydes. Les silanes préférés sont les vinylsilanes, en particulier les vinylalkoxysilanes comme le vinyltriméthoxysilane (VTMOS) ou le vinyltriéthoxysilane (VTEOS), les allylalkoxysilanes comme l'allyltriméthoxysilane (ATMOS) ou l'allyltriéthoxysilane (ATEOS), les 3-méthacryloxypropyltrialkoxy-silanes comme le 3-méthacryloxypropyltriméthoxysilane ou le 3-méthacryl-oxypropyltriéthoxysilane, etc. Dans le cas où l'on souhaite greffer le ou les silanes sur la ou les résine(s) polymère(s) de la composition moussée, il est souhaitable d'introduire un peroxyde adéquat, qui permettra aux molécules de vinylsilanes de se greffer sur les radicaux formés par le peroxyde sur la ou les chaîne(s) polymère(s). Des agents augmentant l'efficacité du greffage sont utilisables, par exemple l'oxyde de zinc (ZnO). La présence d'eau est indispensable pour amorcer la réaction de réticulation. L'eau réagit avec les groupements silanes, et forme des groupements silanols. Ces derniers pourront, dans des conditions adéquates de température, condenser et créer des ponts entre les chaînes adjacentes porteuses de groupements silanols. Afin de réduire considérablement la durée nécessaire à la condensation des groupes silanols en lien siloxanes (Si-O-Si), on ajoutera avantageusement des catalyseurs de réticulation, comme le dioctylbis[(1-oxododécyl)oxy]stannane, le dilaurate de dibutylétain ou de dioctylétain, l'acide dodécylbenzènesulfonique, etc., ou leurs mélanges. Il est utile de prévoir des additifs permettant de contrôler le degré d'humidité présente dans la composition, ce qui évite une réticulation trop précoce de celle-ci. Ces additifs réagissent plus vite avec l'eau que les silanes de réticulation (« scorch retardants »). On citera par exemple l'oxyde de zinc (ZnO), le n-octyltriethoxy-silane. Dans le même objectif, on veillera à sécher suffisamment les composants de la formulation pour limiter la quantité d'humidité présente lors de l'extrusion et éviter une réticulation prématurée dans l'extrudeuse.

Parmi les peroxydes utiles pour la réticulation, on peut citer par exemple le peroxydicumyle (DCP), l'α,α'-bis(t-butylperoxy)-1,3-diisopropylbenzène, le 2,5-diméthyl-2,5-di-tert-butylperoxyhexane (HXA), etc., ou leurs mélanges. Ils attaquent la ou les chaîne(s) polymère(s) à certains endroits (doubles liaisons, carbone tertiaires, ...), et l'électron libre formé va pouvoir se recombiner avec celui d'une chaîne adjacente, créant ainsi un pont (lien) de réticulation entre ces chaînes.

La mousse peut avantageusement contenir des co-agents de réticulation comme (partie du) composant de réticulation, notamment le triméthacrylate de triméthylolpropane (TMPTMA), l'isocyanurate de triallyle (TAIC), ...

Il est important de noter que dans le contexte de l'invention, l'indication que l'article contient les composants de réticulation d) mentionnés signifie en réalité que l'article (fini) a subi une réticulation en présence desdits composés qui, selon leur nature et fonction, sont décomposés, libérés ou incorporés totalement ou en partie dans l'article en mousse polymère.

En variante ou en outre, une réticulation (supplémentaire) peut être réalisée sur l'article semi-fini par exposition à un rayonnement énergétique UV, bêta ou gamma selon l'épaisseur de l'article à réticuler. Les doses d'irradiation bêta ou gamma utilisées seront généralement de 50 à 200 kGy, notamment de 100 à 150 kGy, l'irradiation étant de préférence réalisée avec une mise à température de l'article en mousse polymère, notamment à une température de l'article de 100 à 230 °C, par exemple à 150 °C ou à 200 °C. Il faut cependant rester à bonne distance de la température de fusion de la composition moussée afin de ne pas provoquer de déformation de l'article sous l'effet de son propre poids, porte-à-faux,

Dans un deuxième aspect, l'invention propose une structure de protection contre le feu comprenant un article en mousse polymère résistant au feu selon la présente invention. La structure peut être une structure plane, de préférence une plaque de protection contre le feu dans le domaine de la construction ou de l'automobile, la plaque de protection contre le feu étant adaptée pour être installée sur des surfaces à protéger, tels que des parois de bâtiments ou des surfaces de carrosserie. En variante, la structure de protection contre le feu a une forme tubulaire et est de préférence une gaine de protection contre le feu dans le domaine de la construction ou de l'automobile. Une telle gaine de protection contre le feu est adaptée pour être installée (séparément) sur des câbles et conduites, en particulier des conduites de fluides inflammables, notamment pour des conduites de carburant. Dans cette variante, la gaine est une structure séparée de l'élément qu'elle doit protéger et est appliquée après la fabrication de l'élément en question. Si nécessaire ou souhaité, la structure peut néanmoins être fixée à l'élément à protéger, par exemple par collage ou thermofusion, etc.

Dans une autre variante, la structure de protection contre le feu est une structure tubulaire qui forme une couche de protection extérieure contre le feu sur des câbles et conduites dans le domaine de la construction ou de l'automobile, en particulier sur des conduites de fluides inflammables, notamment pour des conduites de carburant. Dans ces variantes, et contrairement à la variante précédente, la structure fait partie intégrante de l'élément qu'elle protège et est généralement appliquée lors de la fabrication de l'élément, par exemple par extrusion en ligne ou par coextrusion.

Un troisième aspect concerne l'utilisation d'un article en mousse polymère résistant au feu ou d'une structure de protection contre le feu selon l'invention comme élément de protection contre le feu dans le domaine de la construction ou de l'automobile. Il s'agit de préférence d'une plaque de protection contre le feu qui sera installée sur des surfaces à protéger, tels que des parois de bâtiments ou des surfaces de carrosserie, des parois de batterie électrique, ou encore d'une gaine de protection contre le feu qui sera installée sur des câbles et conduites à protéger, en particulier des conduites de fluides inflammables, notamment pour des conduites de carburant.

L'invention concerne également, dans un quatrième aspect, un procédé de fabrication d'un article en mousse polymère résistant au feu, le procédé comprenant les étapes suivantes :
(i) dosage des composants a1), a2), a3), b), c) et éventuellement d), prémélangés ou dosés individuellement, à l'alimentation d'une extrudeuse ;
(ii) plastification et mélange des constituants à haute température pour fondre et homogénéiser les constituants ;
(iii) homogénéisation des constituants ;
(iv) refroidissement de la masse ;
(v) extrusion à l'air libre à travers une filière, contrôlée en température, ayant une section de forme prédéfinie, provoquant la formation d'une mousse polymère ;
(vi) refroidissement de la mousse polymère ainsi formée en article en mousse polymère résistant au feu ;
dans lequel le moussage est réalisé soit au moyen d'un ou plusieurs agents de moussage chimiques prémélangés ou dosés à l'étape (i) et/ou (ii), soit par alimentation ou injection d'un agent de moussage physique à l'étape (i), à l'étape (ii) ou entre l'étape (ii) et (iii), soit par une combinaison des deux ; et dans lequel la réticulation de la mousse polymère est réalisée soit par voie chimique en présence du composant d), soit par voie physique par exposition à un rayonnement énergétique, de préférence UV, alpha ou bêta, soit par une combinaison des deux.

Le procédé peut également comprendre pendant l'étape (vi), avant le refroidissement, l'étirage et le guidage de la mousse formée.

Dans ledit procédé, le ou les agents de moussage chimiques sont généralement choisis parmi les agents de moussage chimiques solides ou liquides, de préférence les carbonates de soude, l'acide citrique ou leur combinaison, l'azodicarbonamide, l'azobisiso-butyronitrile, la dinitroso-pentaméthylène-tétramine, le 4,4'-oxybis(benzènesulfonylhydrazide), le diphényl-sulfone-3,3'-disulfohydrazide, le benzène-1,3-disulfohydrazide, le p-toluènesulfonyl-semicarbazide, ou leurs combinaisons ; et/ou parmi les agents de moussage physiques liquides ou gazeux, de préférence les alcanes en C₂ à C₆ linéaires, ramifiés ou cycliques, notamment l'isobutane, l'isopentane, le néopentane, le n-pentane, le cyclopentane, les gaz inertes, notamment l'azote, le CO₂ ou l'argon, les composés hydrofluorocarbonés, l'eau, l'éthanol, le diméthyléther, ou leurs combinaisons.

L'épaisseur de la mousse polymère dans les articles et les structures selon l'invention est généralement comprise entre 0,5 mm et 10 cm, voire plus, selon les applications. Dans les applications de protection sous forme de gaine ou tube ou sous forme d'une couche tubulaire faisant partie d'un élément à protéger, l'épaisseur de la mousse polymère mesurée dans la direction du rayon de la section du tube ou de la gaine est typiquement de 0,5 à 50 mm, de préférence de 1 à 10 mm, de manière particulièrement préférée de 2 à 5 mm. Dans les applications sous forme plane, par exemple de plaque, l'épaisseur de la mousse polymère mesurée dans le sens perpendiculaire ou tangent au plan de la couche de mousse polymère est typiquement de 0,5 mm à 15 cm, de préférence de 5 mm à 5 cm, de manière particulièrement préférée de 2 à 25 mm.

Dans le contexte de l'invention, l'expression résistance au feu », respectivement « résistant(e) au feu » signifie d'une part que la mousse ou l'article retarde la propagation d'une flamme au travers de la mousse ou de l'article pendant un temps significativement plus long qu'au travers d'une mousse ou un article équivalent en polymères oléfiniques sans composant b). D'autre part, ces expressions signifient également que la mousse ou l'article retarde la propagation d'une flamme au travers de la mousse ou de l'article pendant un temps significativement plus long qu'au travers d'un article de composition identique ou similaire et de masse égale, mais non moussé. Les articles en mousse polymère résistants au feu de l'invention ont donc un pouvoir retardateur de flamme élevé et la signification de l'expression « résistant(e) au feu » est équivalente à « retardat(eur/rice) de flamme ».

Dans le contexte de l'invention, l'indice de fluidité (MFI ou MFR) est mesuré selon la norme ASTM D1238. Les pourcentages en poids des composants polymères, des composants ignifugeants, des additifs et, le cas échéant, des composants de réticulation se rapportent toujours au poids total de l'article en mousse polymère, c'est-à-dire l'ensemble des composants a), b), c) et si applicable d). Les pourcentages en poids des (co)monomères dans un polymère se rapportent au poids de ce polymère uniquement.

### Exemples

Des compositions selon l'invention pouvant être extrudées et réticulés en articles en mousse polymère résistants au feu selon le procédé décrit précédemment comprennent les composants suivant (les quantités pouvant être variées pour chaque composant à l'intérieur des gammes indiquées sous condition que la somme a) + b) + c) + d) = 100 % en poids de l'article) :

| **Composant** | **Détail** | **Quantité polymères (% en poids)** | **Quantité (% en poids)** |
|---|---|---|---|
| **a)** | Composant en polymères, dont | | |
| a1) | EMA, EEA, EPA, EBA et/ou EVA | 5-35 | |
| a2) | EBA-g-MAH et/ou EVA-g-MAH | 2-40 | |
| a3) | POE et/ou POE et/ou PE | ≥05 | |
| | | **a1) + a2) + a3) =** | **25-55** |
| **b)** | Hydroxyde(s) de magnésium et/ou d'aluminium et/ou combinaison de carbonate de calcium et de gomme silicone, et éventuellement nanoargile(s) | | **45-70** |
| **c)** | Additifs | | **0,01-8** |
| **d)** | Composants de réticulation (optionnel) | | **0,2-8** |
| | | **Total** = | **100** |

Des compositions particulièrement avantageuses selon l'invention pouvant être extrudées et réticulés en articles en mousse polymère résistants au feu selon le procédé décrit précédemment comprennent les composants suivant (les quantités pouvant être variées pour chaque composant à l'intérieur des gammes indiquées sous condition que la somme a) + b) + c) + d) = 100 % en poids de l'article) :

| **Composant** | **Détail** | **Quantité polymères (% en poids)** | **Quantité (% en poids)** |
|---|---|---|---|
| **a)** | Composant en polymères, dont | | |
| a1) | EMA, EEA, EPA, EBA et/ou EVA | 14-25 | |
| a2) | EBA-g-MAH et/ou EVA-g-MAH | 3,5-10 | |
| a3) | POE et/ou POE et/ou PE | 0,9-15 | |
| | | **a1) + a2) + a3)** | **25-40** |
| **b)** | Hydroxyde(s) de magnésium et/ou d'aluminium et/ou combinaison de carbonate de calcium et de gomme silicone, et éventuellement nanoargile(s) | | **55-65** |
| **c)** | Additifs | | **3,5-5** |
| **d)** | Composants de réticulation (optionnel) | | **1,5-3** |
| | | **Total** = | **100** |

Des exemples concrets d'articles de mousse polymère selon l'invention présentent la composition suivante :

| **Composant** | **Détail** | **Fonction** | **Quantité (% en poids)** |
|---|---|---|---|
| a1) | EBA | | 14-25 |
| a2) | EBA-g-MAH | | 3,5-6 |
| a3) | POE/POE/PE | | 0,9-15 |
| b) | Hydroxyde de magnésium | | 55-65 |
| c) | additifs | | 0,9-2 |
| | Mélange-maître de LDPE et de 50% de talc | nucléateur de cellules | 2,8 |
| | Mélange-maître de LDPE et de 50% noir de carbone | pigment | 0,1 |
| | Concentré de 70% de GMS (ATMER 122 de CRODA) dans 30% d'EVA | Antistatique | 0,1 |
| d) (et c)) | Mélange-maître de HDPE poreux + 65% mélange silane + | | 2,3 |
| | peroxyde de greffage + catalyseur de réticulation + antioxydants | | |
| | | **Total =** | **100** |

Sur base des compositions ci-dessus, des échantillons de gaines tubulaires ont été extrudés à l'air libre à travers une filière, contrôlée en température, ayant une section de forme prédéfinie, provoquant la formation d'une mousse polymère, et réticulés selon le procédé décrit précédemment. En particulier, les différents composants sont dosés à l'alimentation d'une extrudeuse, avant d'être plastifiés et mélangés à haute température de consigne (comprise entre 150 et 200 °C) pour fondre et homogénéiser les constituants. L'extrudeuse est une extrudeuse double vis. La masse ainsi obtenue est ensuite refroidie puis extrudée à l'air libre à travers une filière, contrôlée en température, ayant une section de forme prédéfinie, provoquant la formation d'une mousse polymère. L'agent de moussage est soit un agent de moussage chimique (CBA) dosé à l'alimentation de l'extrudeuse, soit un agent de moussage physique, tel que l'isobutane, injecté avec un débit compris entre 1 et 5 g/min avant l'étape d'extrusion à l'air libre. La température de la masse à la filière lors de l'extrusion est généralement contrôlée entre 100 et 150 °C et son ouverture est comprise entre 0,5 et 4 mm. L'extrusion de la masse se fait avec des débits de l'ordre de 15 à 25 kg/h. La mousse polymère ainsi formée est ensuite refroidie à l'air ou à l'eau afin de former un article en mousse polymère résistant au feu. La réticulation a lieu dans par voie chimique du fait de la présence d'un mélange silane pour les Exemples 1 et 6 et par irradiation gamma pour les autres Exemples.

Le test de résistance au feu a été réalisé de manière générale selon la norme DIN 73379, avec une exposition d'au moins 4 minutes à une flamme à 800 °C avec une conduite d'eau circulante à une pression de 1,5 bar. Le test est réussi si aucune fuite d'eau n'est observée endéans les 4 minutes.

Gaines de mousse réticulées, diamètre intérieur = 8,5 mm.

| Ex. | Composition (partielle) Agent de moussage | Densité de la composition avant moussage (kg/m³) | Densité de l'article en mousse (kg/m³) | Epaisseur paroi (mm) | Résultat (temps mesuré) |
|---|---|---|---|---|---|
| 1 | EBA + 60% Mg(OH)₂ Isobutane | 1410 | 800 à 850 | 1,2 | > 4 min, test arrêté, réussi |
| 2 | EBA + 60% Mg(OH)₂ Isobutane | 1430 | 730 | 4 | > 8 min, test arrêté, réussi |
| 3 (comparatif) | EBA + 30% Mg(OH)₂ CBA* | 1130 | 830 | 4 | 0,54 s, test non réussi |
| 4 | EBA + 60% Mg(OH)₂ Isobutane | 1430 | 780 | 4 | > 8 min, test arrêté, réussi |
| 5 (comparatif) | EBA + 33% Mg(OH)₂ Isobutane | 1150 | 500 | 4 | 1,11 s, test non réussi |
| 6 | EBA + 60% Mg(OH)₂ + silane Isobutane | 1400 | 730 | 4 | > 8 min, test arrêté, réussi |
| 7 (comparatif) | EBA + 0% Mg(OH)₂ | 935 | 830 | 4 | 1,11 s, test non réussi |
| | CBA* | | | | |

| | | | | | |
|---|---|---|---|---|---|
| *CBA : agent de moussage chimique | | | | | |

Une deuxième série de tests de résistance au feu a été réalisée selon la norme DIN 73379, avec une exposition d'au moins 4 minutes à une flamme à 800 °C +/- 50 °C avec une conduite d'eau circulante à une pression de 5 bar. Le test est réussi si aucune fuite d'eau n'est observée endéans les 4 minutes.

Gaines de mousse réticulées, diamètre intérieur = 8,5 mm.

| Ex. | Composition (partielle) | Densité kg/m3 | Epaisseur paroi (mm) | Résultat (temps mesuré) |
|---|---|---|---|---|
| 8 | - | - | 2 | > 6 min, test arrêté, réussi |
| 9 | - | - | 1 | > 8 min, test arrêté, réussi |

## Revendications

1. Article en mousse polymère résistant au feu, la mousse polymère comprenant
a) 25 à 55 % en poids d'une composition en polymères comprenant
a1) un premier composant polymère choisi parmi les copolymères d'éthylène-acrylate d'alkyle en C₁ à C₄, les copolymères d'éthylène-acétate de vinyle, ou leurs mélanges,
a2) un deuxième composant polymère choisi parmi les copolymères d'éthylène comportant des fonctions anhydrides maléique, de préférence des copolymères d'éthylène-acrylate d'alkyle en C₁ à C₄ greffés anhydride maléique, les copolymères d'éthylène-acétate de vinyle greffés anhydride maléique, ou leurs mélanges,
a3) un troisième composant polymère choisi parmi les polyoléfines plastomères, les polyoléfines élastomères, les homopolymères d'éthylène et leurs mélanges,
b) 45 à 70 % en poids d'un composant ignifugeant choisi parmi l'hydroxyde de magnésium, l'hydroxyde d'aluminium, une combinaison de carbonate de calcium et de gomme silicone, ou leurs mélanges, et éventuellement une ou plusieurs nanoargiles,
c) 0,01 à 8 % en poids d'additifs comprenant les pigments, les antioxydants, les agents anti-UV, des lubrifiants, les agents antistatiques, les nucléateurs de cellules, les dénucléateurs de cellules, les agents réflecteurs/absorbeurs d'infra-rouges, les stabilisateurs thermiques et/ou les désactivateurs métalliques,
l'article en mousse polymère ayant subi une réticulation par voie chimique et/ou physique, la densité de la mousse étant comprise entre 700 et 1000 kg/m³ et les pourcentages en poids se rapportant au poids de l'article en mousse polymère.

2. Article en mousse polymère résistant au feu selon la revendication 1, lequel a subi une réticulation en présence de
d) 0,2 à 8 % en poids d'un composant de réticulation comprenant un agent de réticulation chimique, choisi de préférence parmi les peroxydes organiques, les vinylsilanes, les allylsilanes, les méthacryloxypropylsilanes ou leurs mélanges ; et/ou un co-agent de réticulation, choisi de préférence parmi le triméthacrylate de triméthylolpropane, l'isocyanurate de triallyle, l'oxyde de zinc, ou leurs mélanges.

3. Article en mousse polymère résistant au feu selon la revendication 1 ou 2, dans lequel le premier composant polymère a1) représente entre 5 et 35 % en poids, notamment de 7,5 à 30 % en poids, en particulier de 10 à 25 % en poids du poids de l'article en mousse polymère ; dans lequel le premier composant polymère a1) comprend de 5 à 40 % en poids, notamment de 10 à 35 % en poids, en particulier de 14 à 30 % en poids, de manière particulièrement préférée de 16 à 25 % en poids de groupes acrylate d'alkyle en C₁ à C₄, respectivement acétate de vinyle, par rapport au poids du premier composant ; et/ou dans lequel l'indice de fluidité du premier composant a1) se situe entre 0,1 et 20 g/10 min, de préférence entre 2 et 10 g/10 min, mesuré à 190° C, 2.16 kg, selon la norme ASTM D1238.

4. Article en mousse polymère résistant au feu selon l'une quelconque des revendications précédentes, dans lequel le deuxième composant polymère a2) représente entre 2 et 40 % en poids, notamment de 3 à 30 % en poids, en particulier de 4 à 25 % en poids du poids de l'article en mousse polymère ; dans lequel le deuxième composant polymère a2) comprend de 0,1 à 10 % en poids, notamment de 0,5 à 5 % en poids, en particulier de 1 à 4 % en poids en groupes anhydride maléique par rapport du poids du deuxième composant polymère ; et/ou dans lequel l'indice de fluidité du deuxième composant a2) se situe entre 0,15 et 200 g/10 min, notamment entre 0,5 et 100 g/10 min, de préférence entre 1 et 20 g/10 min, mesuré à 190° C, 2.16 kg, selon la norme ASTM D1238.

5. Article en mousse polymère résistant au feu selon l'une quelconque des revendications précédentes, dans lequel dans le troisième composant a3) la densité les polyoléfines élastomères se situe entre 0,86 et 0,89 kg/m³ et celle des polyoléfines plastomères entre 0,89 et 0,91 kg/m³ ; et/ou dans lequel l'indice de fluidité du troisième composant a3) est situé entre 0,15 et 30 g/10 min, notamment entre 0,2 et 20 g/10 min, de préférence entre 0,3 et 10 g/10 min mesuré à 190° C, 2.16 kg, selon la norme ASTM D1238.

6. Article en mousse polymère résistant au feu selon l'une quelconque des revendications précédentes, dans lequel le composant ignifugeant b) comprend jusqu'à 10 % en poids de nanoargile(s), de préférence de 0,1 à 6 % en poids et en particulier de 0,5 à 5 % en poids par rapport au poids de l'article en mousse polymère, les nanoargiles étant de préférence des montmorillonites ou des hectorites, modifiées ou non.

7. Article en mousse polymère résistant au feu selon l'une quelconque des revendications précédentes, qui est une plaque de mousse résistante au feu ou une gaine de mousse résistante au feu.

8. Structure de protection contre le feu comprenant un article en mousse polymère résistant au feu selon l'une quelconque des revendications précédentes.

9. Structure de protection contre le feu selon la revendication 8 qui est une structure plane, de préférence une plaque de protection contre le feu dans le domaine de la construction ou de l'automobile, la plaque de protection contre le feu étant adaptée pour être installée sur des surfaces à protéger, tels que des parois de bâtiments ou des surfaces de carrosserie.

10. Structure de protection contre le feu selon la revendication 8 qui est une structure tubulaire, de préférence une gaine de protection contre le feu dans le domaine de la construction ou de l'automobile, la gaine de protection contre le feu étant adaptée pour être installée sur des câbles et conduites, en particulier des conduites de fluides inflammables, notamment pour des conduites de carburant.

11. Structure de protection contre le feu selon la revendication 8 qui est une structure tubulaire formant une couche de protection extérieure contre le feu sur des câbles et conduites dans le domaine de la construction ou de l'automobile, en particulier sur des conduites de fluides inflammables, notamment pour des conduites de carburant.

12. Utilisation d'un article en mousse polymère résistant au feu selon l'une quelconque des revendications 1 à 7 ou d'une structure de protection contre le feu selon la revendication 9 comme élément de protection contre le feu dans le domaine de la construction ou de l'automobile, de préférence comme plaque de protection contre le feu à installer sur des surfaces à protéger, tels que des parois de bâtiments ou des surfaces de carrosserie, des parois de batterie électrique, ou comme gaine de protection contre le feu à installer sur des câbles et conduites à protéger, en particulier des conduites de fluides inflammables, notamment pour des conduites de carburant.

13. Procédé de fabrication d'un article en mousse polymère résistant au feu selon l'une quelconque des revendications 1 à 7, le procédé comprenant les étapes suivantes :
(i) dosage des composants a1), a2), a3), b), c) et éventuellement d), prémélangés ou dosés individuellement, à l'alimentation d'une extrudeuse ;
(ii) plastification et mélange des constituants à haute température pour fondre et homogénéiser les constituants ;
(iii) homogénéisation des constituants ;
(iv) refroidissement de la masse ;
(v) extrusion à l'air libre à travers une filière, contrôlée en température, ayant une section de forme prédéfinie, provoquant la formation d'une mousse polymère ;
(vi) refroidissement de la mousse polymère ainsi formée en article en mousse polymère résistant au feu ;
dans lequel le moussage est réalisé soit au moyen d'un ou plusieurs agents de moussage chimiques prémélangés ou dosés à l'étape (i) et/ou (ii), soit par alimentation ou injection d'un agent de moussage physique à l'étape (i), à l'étape (ii) ou entre l'étape (ii) et (iii), soit par une combinaison des deux ; et dans lequel la réticulation de la mousse polymère est réalisée soit par voie chimique en présence du composant d), soit par voie physique par exposition à un rayonnement énergétique, de préférence UV, alpha ou bêta, soit par une combinaison des deux.

14. Procédé selon la revendication 13, dans lequel l'étape (vi) comprend en outre l'étirage et le guidage de la mousse formée.

15. Procédé selon la revendication 13 ou 14, dans lequel le ou les agents de moussage chimiques sont choisis parmi les agents de moussage chimiques solides ou liquides, de préférence les carbonates de soude, l'acide citrique ou leur combinaison, l'azodicarbonamide, l'azobisiso-butyronitrile, la dinitroso-pentaméthylène-tétramine, le 4,4'-oxybis(benzènesulfonylhydrazide), le diphényl-sulfone-3,3'-disulfohydrazide, le benzène-1,3-disulfohydrazide, le p-toluènesulfonyl-semicarbazide, ou leurs combinaisons ; et/ou les agents de moussage physiques liquides ou gazeux, de préférence les alcanes en C₂ à C₆ linéaires, ramifiés ou cycliques, notamment l'isobutane, l'isopentane, le néopentane, le n-pentane, le cyclopentane, les gaz inertes, notamment l'azote, le CO₂ ou l'argon, les composés hydrofluorocarbonés, l'eau, l'éthanol, le diméthyléther, ou leurs combinaisons.

## Patentansprüche

1. Gegenstand aus feuerbeständigem Polymerschaumstoff, wobei der Polymerschaumstoff Folgendes umfasst
a) 25 bis 55 Gewichts-% einer Polymerzusammensetzung, die Folgendes umfasst
a1) eine erste Polymerkomponente, die aus den Ethylen/C₁-C₄-Alkylacrylat-Copolymeren, den Ethylen/Vinylacetat-Copolymeren oder deren Mischungen ausgewählt ist,
a2) eine zweite Polymerkomponente, die aus den Ethylencopolymeren, welche funktionelle Maleinsäureanhydridgruppen aufweisen, vorzugsweise den Ethylen/C₁-C₄-Alkylacrylat-Copolymeren, auf welche Maleinsäureanhydrid gepfropft ist, den Ethylen/Vinylacetat-Copolymeren, auf welche Maleinsäureanhydrid gepfropft ist, oder deren Mischungen ausgewählt ist,
a3) eine dritte Polymerkomponente, die aus den thermoplastischen Polyolefinen, den elastomeren Polyolefinen, den Ethylen-Homopolymeren und deren Mischungen ausgewählt ist,
b) 45 bis 70 Gewichts-% einer flammfest machenden Komponente, die Magnesiumhydroxid, Aluminiumhydroxid, eine Kombination von Calciumcarbonat und Silikongummi oder deren Mischungen sowie möglicherweise ein oder mehrere Nanotonminerale umfasst,
c) 0,01 bis 8 Gewichts-% an Zusatzstoffen, umfassend Pigmente, Antioxidantien, UV-Filter, Schmiermittel, Antistatika, zellbildungsfördernde Mittel, zellbildungshemmende Mittel, infrarotwellenreflektierende/-absorbierende Mittel, Hitzestabilisatoren und/oder Metalldeaktivatoren,
wobei der Gegenstand aus Polymerschaumstoff eine Vernetzung auf chemischem und/oder physikalischen Wege erfahren hat, die Dichte des Schaumstoffs im Bereich von 700 bis 1.000 kg/m³ liegt und die Gewichtsprozentangaben sich auf das Gewicht des Gegenstands aus Polymerschaumstoff bezieht.

2. Feuerbeständiger Gegenstand aus Polymerschaumstoff nach Anspruch 1, der eine Vernetzung in Gegenwart von
d) 0,2 bis 8 Gewichts-% einer Vernetzungskomponente, die ein chemisches Vernetzungsmittel, welches vorzugsweise aus den organischen Peroxiden, den Vinylsilanen, den Allylsilanen, den Methacryloxypropylsilanen oder deren Mischungen ausgewählt ist; und/oder ein Vernetzungshilfsmittel umfasst, welches vorzugsweise aus Trimethylolpropantrimethacrylat, Triallylisocyanurat, Zinkoxid oder deren Mischungen ausgewählt ist,
erfahren hat.

3. Feuerbeständiger Gegenstand aus Polymerschaumstoff nach Anspruch 1 oder 2, wobei die erste Polymerkomponente a1) zwischen 5 und 35 Gewichts-%, insbesondere 7,5 bis 30 Gewichts-%, im Besonderen 10 bis 25 Gewichts-% vom Gewicht des Gegenstands aus Polymerschaumstoff ausmacht; wobei die erste Polymerkomponente a1) 5 bis 40 Gewichts-%, insbesondere 10 bis 35 Gewichts-%, im Besonderen 14 bis 30 Gewichts-%, auf besonders bevorzugte Weise 16 bis 25 Gewichts-% an C₁-C₄-Alkylacrylatgruppen beziehungsweise Vinylacetatgruppen umfasst, unter Bezugnahme auf das Gewicht der ersten Komponente; und/oder wobei der Schmelzflussindex der ersten Komponente a1) zwischen 0,1 und 20 g/10 min., vorzugsweise zwischen 2 und 10 g/10 min. liegt, wenn die Messung bei 190 °C, 2,16 kg, gemäß der Norm ASTM D1238 erfolgt.

4. Feuerbeständiger Gegenstand aus Polymerschaumstoff nach einem beliebigen der vorhergehenden Ansprüche, wobei die zweite Polymerkomponente a2) zwischen 2 und 40 Gewichts-%, insbesondere 3 bis 30 Gewichts-%, im Besonderen 4 bis 25 Gewichts-% vom Gewicht des Gegenstands aus Polymerschaumstoff ausmacht; wobei die zweite Polymerkomponente a2) 0,1 bis 10 Gewichts-%, insbesondere 0,5 bis 5 Gewichts-%, im Besonderen 1 bis 4 Gewichts-%, an Maleinsäureanhydridgruppen umfasst, unter Bezugnahme auf das Gewicht der zweiten Polymerkomponente; und/oder wobei der Schmelzflussindex der zweiten Komponente a2) zwischen 0,15 und 200 g/10 min., insbesondere zwischen 0,5 und 100 g/10 min., vorzugsweise zwischen 1 und 20 g/10 min. liegt, wenn die Messung bei 190 °C, 2,16 kg, gemäß der Norm ASTM D1238 erfolgt.

5. Feuerbeständiger Gegenstand aus Polymerschaumstoff nach einem beliebigen der vorhergehenden Ansprüche, wobei bei der dritten Komponente a3) die Dichte der elastomeren Polyolefine zwischen 0,86 und 0,89 kg/m³ liegt und diejenige der thermoplastischen Polyolefine zwischen 0,89 und 0,91 kg/m³; und/oder wobei der Schmelzflussindex der dritten Komponente a3) zwischen 0,15 und 30 g/10 min., insbesondere zwischen 0,2 und 20 g/10 min., vorzugsweise zwischen 0,3 und 10 g/10 min. liegt, wenn die Messung bei 190 °C, 2,16 kg, gemäß der Norm ASTM D1238 erfolgt.

6. Feuerbeständiger Gegenstand aus Polymerschaumstoff nach einem beliebigen der vorhergehenden Ansprüche, wobei die flammfest machende Komponente b) bis zu 10 Gewichts-% an Nanotonmineral(en), vorzugsweise 0,1 bis 6 Gewichts-% und insbesondere 0,5 bis 5 Gewichts-%, unter Bezugnahme auf das Gewicht des Gegenstands aus Polymerschaumstoff umfasst, wobei es sich bei den Nanotonmineralen vorzugsweise um Montmorillonite oder Hectorite handelt, die modifiziert oder unmodifiziert sind.

7. Feuerbeständiger Gegenstand aus Polymerschaumstoff nach einem beliebigen der vorhergehenden Ansprüche, wobei es sich um eine feuerbeständige Schaumstoffplatte oder eine feuerbeständige Schaumstoffhülle handelt.

8. Brandschutzstruktur, die einen feuerbeständigen Gegenstand aus Polymerschaumstoff nach einem beliebigen der vorhergehenden Ansprüche umfasst.

9. Brandschutzstruktur nach Anspruch 8, wobei es sich um eine ebene Struktur handelt, vorzugsweise um eine Brandschutzplatte im Bauwesen oder im Automobilsektor, wobei die Brandschutzplatte dafür geeignet ist, auf zu schützenden Oberflächen, wie etwa Wänden von Bauwerken oder Karosserieflächen, angebracht zu werden.

10. Brandschutzstruktur nach Anspruch 8, wobei es sich um eine röhrenförmige Struktur handelt, vorzugsweise um eine Brandschutzhülle im Bauwesen oder im Automobilsektor, wobei die Brandschutzhülle dafür geeignet ist, auf Kabeln und Leitungen, im Besonderen Leitungen für entzündliche Fluids, angebracht zu werden, wobei sie insbesondere für Kraftstoffleitungen bestimmt ist.

11. Brandschutzstruktur nach Anspruch 8, wobei es sich um eine röhrenförmige Struktur handelt, die eine außenliegende Brandschutzschicht auf Kabeln und Leitungen im Bauwesen oder im Automobilsektor, im Besonderen auf Leitungen für entzündliche Fluids bildet, wobei sie insbesondere für Kraftstoffleitungen bestimmt ist.

12. Verwendung eines feuerbeständigen Gegenstands aus Polymerschaumstoff nach einem beliebigen der Ansprüche 1 bis 7 oder einer Brandschutzstruktur nach Anspruch 9 als Brandschutzelement im Bauwesen oder im Automobilsektor, vorzugsweise als Brandschutzplatte, die dazu bestimmt ist, auf zu schützenden Oberflächen, wie etwa Wänden von Bauwerken oder Karosserieflächen, Wänden von elektrischen Batterien, angebracht zu werden, oder als Brandschutzhülle, die dazu bestimmt ist, auf zu schützenden Kabeln und Leitungen, im Besonderen Leitungen für entzündliche Fluids, angebracht zu werden, wobei sie insbesondere für Kraftstoffleitungen bestimmt ist.

13. Verfahren zur Herstellung eines feuerbeständigen Gegenstands aus Polymerschaumstoff nach einem beliebigen der Ansprüche 1 bis 7, wobei das Verfahren die folgenden Schritte umfasst:
(i) Zudosieren der Komponenten a1), a2), a3), b), c) und gegebenenfalls d), in Vormischung oder als Einzeldosen, in die Speisevorrichtung eines Extruders;
(ii) Erweichen und Vermischen der Bestandteile bei hoher Temperatur, um diese Bestandteile zum Schmelzen zu bringen und zu homogenisieren;
(iii) Homogenisieren der Bestandteile;
(iv) Abkühlen der Masse;
(v) Extrudieren unter Umgebungsluftatmosphäre durch eine Düse mit Temperaturregelung, welche eine vorbestimmte Querschnittsform aufweist, wodurch die Bildung des Polymerschaumstoffs bewirkt wird;
(vi) Abkühlen des auf diese Weise gebildeten Polymerschaumstoffs, sodass ein feuerbeständiger Gegenstand aus Polymerschaumstoff entsteht;
wobei das Aufschäumen entweder mittels eines oder mehrerer chemischer Aufschäummittel, die im Schritt (i) und/oder (ii) in der Vormischung vorliegen oder zudosiert werden, oder durch Zuführen oder Einleiten eines physikalischen Aufschäummittels im Schritt (i), im Schritt (ii) oder zwischen den Schritten (ii) und (iii), oder durch eine Kombination aus beidem erfolgt; und wobei die Vernetzung des Polymerschaumstoffs entweder auf chemischem Wege in Gegenwart der Komponente d) oder auf physikalischem Wege durch Einwirkenlassen einer energiereichen Strahlung, vorzugsweise vom Typ UValpha oder -beta, oder durch eine Kombination aus beidem erfolgt.

14. Verfahren nach Anspruch 13, wobei der Schritt (vi) darüber hinaus das Einwirken von Zieh- und Führungsmitteln auf den Schaumstoff nach dessen Bildung umfasst.

15. Verfahren nach Anspruch 13 oder 14, wobei das oder die chemischen Aufschäummittel aus den feststofflichen oder flüssigen chemischen Aufschäummitteln, vorzugsweise den Natriumcarbonaten, Citronensäure oder deren Kombination, Azodicarbonamid, Azo-bis-isobutyronitril, Dinitrosopentamethylentetramin, 4,4'-Oxy-bis-(benzolsulfonylhydrazid), Diphenylsulfon-3,3'-disulfohydrazid, Benzol-1,3-disulfohydrazid, p-Toluolsulfonylsemicarbazid, oder deren Kombinationen; und/oder aus den flüssigen oder gasförmigen physikalischen Aufschäummitteln, vorzugsweise den geradkettigen, verzweigten oder zyklischen C₂-C₆-Alkanen, insbesondere Isobutan, Isopentan, Neopentan, n-Pentan, Cyclopentan, den inerten Gasen, insbesondere Stickstoff, CO₂ oder Argon, den teilfluorierten Kohlenwasserstoffverbindungen, Wasser, Ethanol, Dimethylether, oder deren Kombinationen, ausgewählt ist/sind.

## Claims

1. A fire-resistant polymer foam article, the polymer foam comprising
a) 25 to 55% by weight of a polymer composition comprising
a1) a first polymer component selected from ethylene-C₁ to C₄ alkyl acrylate copolymers, ethylene-vinyl acetate copolymers, or mixtures thereof,
a2) a second polymer component selected from ethylene copolymers including maleic anhydride functions, preferably maleic anhydride-grafted ethylene-C₁ to C₄ alkyl acrylate copolymers, maleic anhydride-grafted ethylene-vinyl acetate copolymers, or mixtures thereof,
a3) a third polymer component selected from plastomeric polyolefins, elastomeric polyolefins, ethylene homopolymers and mixtures thereof,
b) 45 to 70% by weight of a flame-retardant component selected from magnesium hydroxide, aluminum hydroxide, a combination of calcium carbonate and silicone gum, or mixtures thereof, and possibly one or more nanoclays,
c) 0.01 to 8% by weight of additives comprising pigments, antioxidants, UV-absorbers, lubricants, antistatic agents, cell nucleators, cell denucleators, infrared absorbing/reflecting agents, heat stabilizers and/or metal deactivators,
the polymer foam article having undergone chemical and/or physical crosslinking, the density of the foam being comprised between 700 and 1000 kg/m³ and the percentages by weight relating to the weight of the polymer foam article.

2. The fire-resistant polymer foam article according to claim 1, which has undergone crosslinking in the presence of
d) 0.2 to 8% by weight of a crosslinking component comprising a chemical crosslinking agent, preferably selected from organic peroxides, vinylsilanes, allylsilanes, methacryloxypropylsilanes or mixtures thereof; and/or a crosslinking co-agent, preferably selected from trimethylolpropane trimethacrylate, triallyl isocyanurate, zinc oxide, or mixtures thereof.

3. The fire-resistant polymer foam article according to claim 1 or 2, wherein the first polymer component a1) represents between 5 and 35% by weight, in particular from 7.5 to 30% by weight, particularly from 10 to 25% by weight of the weight of the polymer foam article; wherein the first polymer component a1) comprises from 5 to 40% by weight, in particular from 10 to 35% by weight, particularly from 14 to 30% by weight, particularly preferably from 16 to 25% by weight of C₁ to C₄ alkyl acrylate or vinyl acetate groups, respectively, relative to the weight of the first component; and/or wherein the melt flow index of the first component a1) is between 0.1 and 20 g/10 min, preferably between 2 and 10 g/10 min, measured at 190°C, 2.16 kg, according to the ASTM D1238 standard.

4. The fire-resistant polymer foam article according to any one of the preceding claims, wherein the second polymer component a2) represents between 2 and 40% by weight, in particular from 3 to 30% by weight, particularly from 4 to 25% by weight of the weight of the polymer foam article; wherein the second polymer component a2) comprises from 0.1 to 10% by weight, in particular from 0.5 to 5% by weight, particularly from 1 to 4% by weight of maleic anhydride groups relative to the weight of the second polymer component; and/or wherein the melt flow index of the second component a2) is between 0.15 and 200 g/10 min, in particular between 0.5 and 100 g/10 min, preferably between 1 and 20 g/10 min, measured at 190°C, 2.16 kg, according to the ASTM D1238 standard.

5. The fire-resistant polymer foam article according to any one of the preceding claims, wherein in the third component a3) the density of the elastomeric polyolefins is between 0.86 and 0.89 kg/m³ and that of the plastomeric polyolefins is between 0.89 and 0.91 kg/m³; and/or wherein the melt flow index of the third component a3) is between 0.15 and 30 g/10 min, in particular between 0.2 and 20 g/10 min, preferably between 0.3 and 10 g/10 min measured at 190°C, 2.16 kg, according to the ASTM D1238 standard.

6. The fire-resistant polymer foam article according to any one of the preceding claims, wherein the flame-retardant component b) comprises up to 10% by weight of nanoclay(s), preferably from 0.1 to 6% by weight and particularly from 0.5 to 5% by weight relative to the weight of the polymer foam article, the nanoclays preferably being modified or unmodified montmorillonites or hectorites.

7. The fire-resistant polymer foam article according to any one of the preceding claims, which is a fire-resistant foam plate or a fire-resistant foam sheath.

8. A fire protection structure comprising a fire-resistant polymer foam article according to any one of the preceding claims.

9. The fire protection structure according to claim 8 which is a planar structure, preferably a fire protection plate in the construction or automotive field, the fire protection plate being adapted to be installed on surfaces to be protected, such as building walls or bodywork surfaces.

10. The fire protection structure according to claim 8 which is a tubular structure, preferably a fire protection sheath in the construction or automotive field, the fire protection sheath being adapted to be installed on cables and conduits, in particular flammable fluid conduits, in particular for fuel conduits.

11. The fire protection structure according to claim 8 which is a tubular structure forming an outer fire protection layer on cables and conduits in the construction or automotive field, particularly on flammable fluid conduits, in particular for fuel conduits.

12. A use of a fire-resistant polymer foam article according to any one of claims 1 to 7 or of a fire protection structure according to claim 9 as a fire protection element in the construction or automotive field, preferably as a fire protection plate to be installed on surfaces to be protected, such as building walls or bodywork surfaces, electric battery walls, or as a fire protection sheath to be installed on cables and conduits to be protected, particularly flammable fluid conduits, in particular for fuel conduits.

13. A method for manufacturing a fire-resistant polymer foam article according to any one of claims 1 to 7, the method comprising the following steps:
(i) dosing the components a1), a2), a3), b), c) and possibly d), premixed or dosed individually, to the feed of an extruder;
(ii) plasticizing and mixing the constituents at high temperature to melt and homogenize the constituents;
(iii) homogenizing the constituents;
(iv) cooling the mass;
(v) open-air extruding through a temperature controlled die having a predefined shape section, causing the formation of a polymer foam;
(vi) cooling the polymer foam thus formed into a fire-resistant polymer foam article;
wherein the foaming is carried out either by means of one or more chemical foaming agents which are premixed or dosed in step (i) and/or (ii), or by feeding or injecting a physical foaming agent in step (i), in step (ii) or between step (ii) and (iii), or by a combination of the two; and wherein the crosslinking of the polymer foam is carried out either chemically in the presence of the component d), or physically by exposure to energetic radiation, preferably UV, alpha or beta radiation, or by a combination of the two.

14. The method according to claim 13, wherein step (vi) further comprises drawing and guiding the formed foam.

15. The method according to claim 13 or 14, wherein the chemical foaming agent(s) is/are selected from solid or liquid chemical foaming agents, preferably sodium carbonates, citric acid or a combination thereof, azodicarbonamide, azobisiso-butyronitrile, dinitroso-pentamethylene-tetramine, 4,4'-oxybis(benzenesulfonylhydrazide), diphenyl-sulfone-3,3'-disulfohydrazide, benzene-1,3-disulfohydrazide, p-toluenesulfonyl-semicarbazide, or combinations thereof; and/or liquid or gaseous physical foaming agents, preferably linear, branched or cyclic C₂ to C₆ alkanes, in particular isobutane, isopentane, neopentane, n-pentane, cyclopentane, inert gases, in particular nitrogen, CO₂ or argon, hydrofluorocarbon compounds, water, ethanol, dimethyl ether, or combinations thereof.
